# EUROPÄISCHE PATENTSCHRIFT

(11) **EP 2 129 539 B1**
(45) Veröffentlichungstag und Bekanntmachung des Hinweises auf die Patenterteilung: **23.06.2010**
(21) Anmeldenummer: 08700834.8
(22) Anmeldetag: 24.01.2008
(51) Int. Cl.: B60J 5/10

(54) **SCHALTUNG DER ELEKTRISCHEN BETÄTIGUNG DER ZWEIGETEILTEN HECKKLAPPE FÜR KRAFTFAHRZEUGE**
CIRCUIT OF THE ELECTRIC ACTUATION OF THE TWO-PART TAILGATE FOR MOTOR VEHICLES
CIRCUIT D'ACTIONNEMENT ÉLECTRIQUE D'UN HAYON EN DEUX PARTIES POUR DES AUTOMOBILES

(30) Priorität: 31.01.2007 CZ 20070083
(43) Veröffentlichungstag der Anmeldung: 09.12.2009
(73) Patentinhaber: Skoda Auto A.S., 293 60 Mladá Boleslav (CZ)
(72) Erfinder: CIMRMAN, Radek, 294 01 Bakov nad Jizerou (CZ); TOPEK, Miroslav, 530 09 Pardubice (CZ)
(86) Internationale Anmeldenummer: PCT/CZ2008/000010
(87) Internationale Veröffentlichungsnummer: WO 2008/092411

(56) Entgegenhaltungen:
- EP-A- 0 159 017
- DE-U1- 9 310 058

## Beschreibung

### Bereich der Technik

Die Erfindung betrifft die Schaltung der elektrischen Betätigung der zweigeteilten Heckklappe für Kraftfahrzeuge. Zum Öffnen nur des unteren Teils der Heckklappe oder der ganzen Heckklappe dient die elektrische Betätigung gemäß der vorgelegten Erfindung.

### Bisheriger Stand der Technik

Gemäß dem Stand der Technik ist eine Ausführung der in zwei Teile aufgeteilten Heckklappe bekannt, so dass entweder die ganze Heckklappe wie bei Liftback-Karosserien oder nur der untere Teil wie bei Hatchback-Karosserien geöffnet werden kann.

Es sind einige Konstruktionsvarianten solcher zweigeteilten Heckklappe bekannt. Zu den meist bekannten gehört die Heckklappe für Kraftfahrzeuge, die aus oberem und unterem Teil besteht. Die zweigeteilte Heckklappe ist mit oberem Schloss versehen, das zur Verbindung des oberen und unteren Teils und/oder des oberen Teils der Heckklappe und der Karosserie dient, und mit unterem Schloss, das die Verbindung der Heckklappe und/oder des unteren Teils mit der Karosserie sicherstellt.

Eine Lösung der elektrischen Betätigung des Öffnens solcher zweigeteilten Heckklappe ist nicht bekannt.

Das Dokument DE 9 310 058 U beschreibt eine variable Heckklappe ohne Elektroschaltung.

### Wesen der Erfindung

Die Lösung der elektrischen Betätigung des Öffnens der zweigeteilten Heckklappe wird in der vorgelegten Erfindung angeboten.

Die zweigeteilte Heckklappe für Fahrzeuge, die aus dem oberen Teil und dem unteren Teil besteht, wird von einem Steuergerät betätigt, das auf Grund von Signalen vom Entriegelungsschalter und vom Schalter des oberen Teils, wobei diese beiden Schalter am unteren Teil der Heckklappe angeordnet sind, die Stellelemente, das untere Schloss und den Anzieher ansteuert. Die Stellelemente sind im Kofferraum der Karosserie angebracht und bestehen aus dem Motor, der über das Getriebe das große Zahnrad angetrieben wird, wobei die beiden Endlagen mit dem Kontrollschalter des unteren Teils und dem Kontrollschalter der Heckklappe signalisiert werden.

### Übersicht der Abbildungen in der Zeichnung

Die Erfindung wird anhand nachstehender schematischer Zeichnungen näher erläutert. In der Abb. 1 wird die Heckklappe in der geschlossenen Position dargestellt. Die Abb. 2 stellt die Hecklappe nur mit geöffnetem unterem Teil und die Abb. 3 die Hecklappe geöffnet als Ganzes dar. Die Abb. 4 enthält eine schematische Darstellung der Schaltung der elektrischen Betätigung der zweigeteilten Heckklappe für Kraftfahrzeuge. Die Abb. 5 enthält eine schematische Darstellung der elektrischen Schaltung des Stellelementes. Die Abb. 6 ist eine Schnittzeichnung des Stellelementes.

### Ausführungsbeispiele der Erfindung

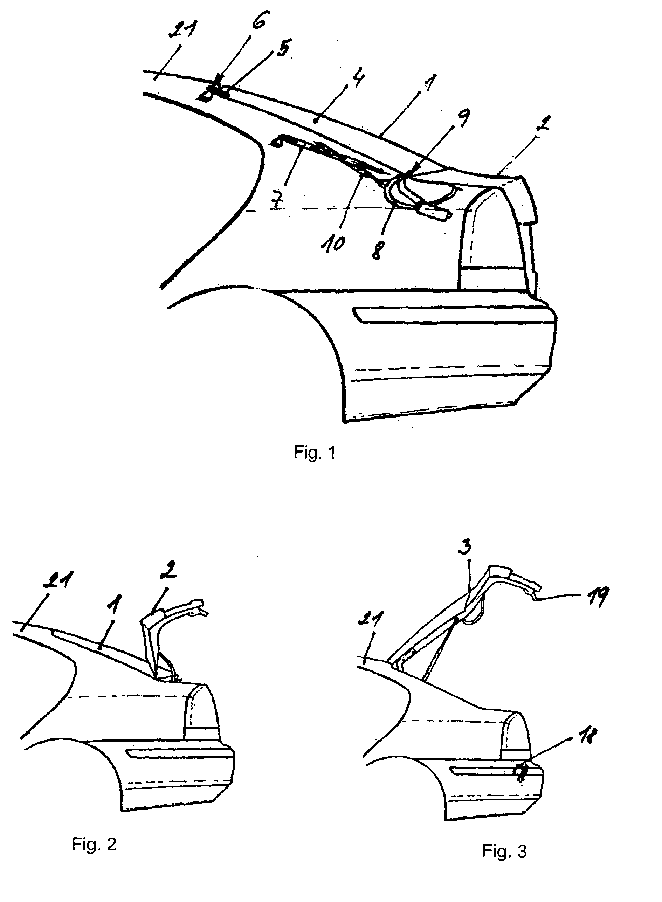

Die zweigeteilte Heckklappe 3 für Kraftfahrzeuge gemäß Abb. 1 bis 3 besteht aus dem Oberteil 1 und Unterteil 2. Der Unterteil 2 ist am unteren Rand mit dem unteren Schloss 19 zur Aufnahme der an der hinteren Schwelle des Kofferraums der Karosserie 21 angebrachten Öse 18 versehen. Der Oberteil 1 ist mit Verglasung 4 versehen und mittels des ersten Paares der Einachsaufhängungen 5 um die Achse 6 aufklappbar an der Karosserie 21 befestigt. Zwischen der Karosserie 21 und dem Oberteil 1 ist das erste Paar der Gasfedern 7 angeordnet. Am unteren Rand des Oberteils 1 ist mittels des zweiten Paares der Einachsaufhängungen 8 um die Achse 9 aufklappbar der Unterteil 2 befestigt. Zwischen dem Oberteil 1 und dem Unterteil 2 ist das zweite Paar der Gasfedern 10 angeordnet.

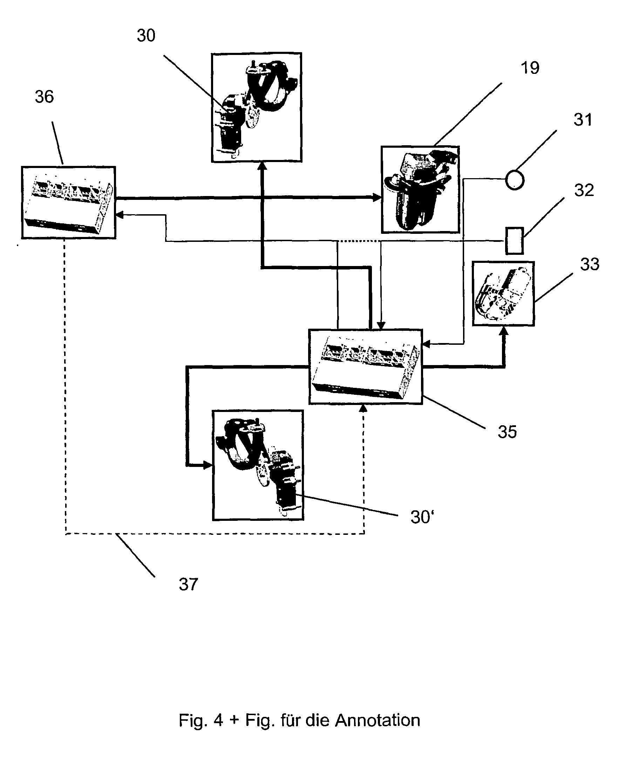

Der Abb. 4 kann die Schaltung der elektrischen Betätigung der Heckklappe für Kraftfahrzeuge entnommen werden. Der Unterteil 2 der zweigeteilten Heckklappe 3 ist mit dem Entriegelungsschalter 32 versehen, der das untere Schloss 19 betätigt, welches die Verbindung des Unterteils 2 bzw. der Heckklappe 3 mit der Karosserie 21 sicherstellt. In der Ausgangsposition kann mit dem Schalter 32 nur der Unterteil 2 geöffnet werden, das heiß, dass der Oberteil 1 und die Karosserie 21 miteinander fest verbunden sind. Des Weiteren befindet sich am Unterteil 2 der Schalter des Oberteils 31, der zur Betätigung der im Kofferraum der Karosserie 21 angebrachten Stellelemente 30, 30' dient. Zum Öffnen der ganzen Heckklappe 3 muss zuerst der Schalter 31 schalten, wodurch mit Hilfe der Stellelemente 30, 30' der Oberteil 1 und der Unterteil 2 miteinander fest verbunden werden, wobei die Verbindung des Oberteils 1 und der Karosserie 21 gleichzeitig gelöst wird, und dann der Schalter 32 aktiviert werden, wodurch der Schloss 19 von der Öse 18 gelöst wird. Dann kann die Heckklappe 3 mit Hilfe eines Griffes, der oft im Unterteil 2 profilgepresst wird, geöffnet werden. Nachdem die Heckklappe wieder geschlossen ist, nehmen die Stellelemente wieder die Ausgangsposition ein, d.h., mit dem Schalter 32 kann nur der Unterteil 2 geöffnet werden. Ist das Fahrzeug zugesperrt, so ist die Betätigung blockiert und weder der Unterteil 2 noch die ganze Heckklappe 3 können geöffnet werden.

Die elektrische Betätigung der Heckklappe für Kraftfahrzeuge wird mit dem Steuergerät der Heckklappe 35 sichergestellt, das Signale vom Entriegelungsschalter 32 und Schalter des Oberteils 31 sowie dem Steuergerät der Komfortelektronik 36 empfängt und je nach dem Zustand der Signale die Stellelemente 30, 30' und mittels Steuergerät 36 das untere Schloss 19 ansteuert.

In der günstigen Ausführung wird die elektrische Betätigung mit einem einzigen Steuergerät gesteuert, das Signale vom Entriegelungsschalter 32 und Schalter des Oberteils 31 empfängt und je nach dem Zustand der Signale die Stellelemente 30, 30' und das untere Schloss 19 ansteuert. Des Weiteren wird vom Steuergerät beim Schließen der Heckklappe 3 bzw. des Unterteils 2 der Anzieher angesteuert, der den Widerstand der Dichtung der Karosserie entlang des Perimeters der Heckklappe 3 zu überwinden hilft und dadurch das Schließen erleichtert.

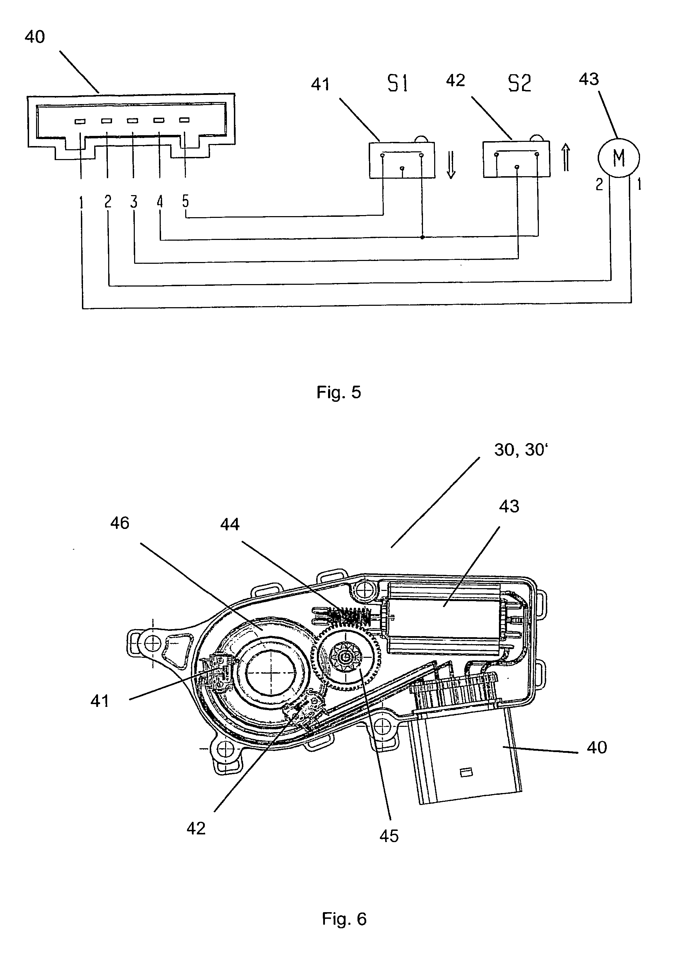

Den Abb. 5 und 6 kann entnommen werden, dass sich die Stellelemente 30, 30' aus dem Motor 43, Getriebe, das aus der Schneckenwelle 44 am Rotor des Motors 43 und dem kleinen Zahnrad 45 besteht, und drehbaren Zahnrad 46 besteht. Die beiden Endlagen mit dem Kontrollschalter des unteren Teils 41 und dem Kontrollschalter der Heckklappe 42 signalisiert werden. Die Stellelemente 30, 30' sind im Kofferraum der Karosserie 21 angebracht und betätigen die Schlösser, mit denen die Heckklappe 3 versehen ist und die beim Öffnen nur des Unterteils 2 die Verbindung des Oberteils 1 und der Karosserie 21 bzw. beim Öffnen der ganzen Heckklappe 3 die Verbindung des Oberteils 1 und des Unterteils 2 sicherstellen.

Die Schalter 41 und 42 schalten und/oder öffnen je nach Position des mit dem Motor 43 betriebenen Zahnrades 46, wobei der Motor in Abhängigkeit vom Signal aus dem Steuergerät angesteuert wird. Beim Erreichen einer der beiden Endlagen bleibt der Motor 43 stehen.

### Auflistung der Referenzzeichen

- 1: Oberteil
- 2: Unterteil
- 3: Heckklappe
- 4: Verglasung
- 5: erste Einachsaufhängung
- 6: Achse der ersten Aufhängung
- 7: erste Gasdruckfeder
- 8: zweite Einachsaufhängung
- 9: Achse der zweiten Aufhängung
- 10: zweite Gasdruckfeder
- 18: Öse
- 19: unteres (Tür)Schloss
- 21: Karosserie
- 30,: 30' Stellelemente
- 31: Schalter Oberteil
- 32: Entriegelungsschalter
- 33: Anzieher
- 35: Steuergerät Heckklappe
- 36: Steuergerät Komfortelektronik
- 37: Sammelschiene
- 40: Stecker
- 41: Kontrollschalter Unterteil
- 42: Kontrollschalter Heckklappe
- 43: Motor
- 44: Schneckenwelle
- 45: kleines Zahnrad
- 46: Ausgangszahnrad

## Patentansprüche

1. Schaltung der elektrischen Betätigung der zweigeteilten Heckklappe für Kraftfahrzeuge (3), die aus dem Oberteil (1) und Unterteil (2) besteht, **dadurch gekennzeichnet, dass** der Unterteil (2) mit einem Entriegelungsschalter (32) zur Betätigung des unteren Schlosses (19), versehen ist, wobei das Schloss die Verbindung zwischen der Heckklappe (3) und/oder dem Unterteil (2) und der Karosserie (21) bzw. deren Trennung sicherstellt, und dass sich am Unterteil (2) der Schalter des Oberteils (31) befindet, der zur Betätigung der im Kofferraum der Karosserie (21) angebrachten Stellelemente (30, 30') dient.

2. Schaltung der elektrischen Betätigung der zweigeteilten Heckklappe für Kraftfahrzeuge gemäß Anspruch Nr. 1, **dadurch gekennzeichnet, dass** die Stellelemente (30, 30') die Verbindung zwischen dem Oberteil (1) und dem Unterteil (2) und/oder zwischen dem Oberteil (1) und der Karosserie (21) bzw. deren Trennung sicherstellen.

3. Schaltung der elektrischen Betätigung der zweigeteilten Heckklappe für Kraftfahrzeuge gemäß den obigen Ansprüchen, **dadurch gekennzeichnet, dass** die elektrische Betätigung der zweigeteilten Heckklappe für Kraftfahrzeuge vom Steuergerät der Heckklappe (35) gesteuert wird, das Signale vom Entriegelungsschalter (32) und Schalter des Oberteils (31) und dem Steuergerät der Komfortelektronik (36) empfängt und je nach Zustand dieser Signale die Stellelemente (30, 30') sowie mittels Steuergerät (36) das untere Schloss (19) ansteuert.

4. Schaltung der elektrischen Betätigung der zweigeteilten Heckklappe für Kraftfahrzeuge gemäß den Ansprüchen 1 und 2, **dadurch gekennzeichnet, dass** die elektrische Betätigung vom Steuergerät gesteuert wird, das Signale vom Entriegelungsschalter (32) und Schalter des Oberteils (31) empfängt und je nach Zustand dieser Signale und Zustand der Zentralschließanlage die Stellelemente (30, 30') und das untere Schloss (19) betätigt.

5. Schaltung der elektrischen Betätigung der zweigeteilten Heckklappe für Kraftfahrzeuge gemäß den obigen Ansprüchen, **dadurch gekennzeichnet, dass** die Stellelemente (30, 30') aus dem Motor (43) bestehen, der über das Getriebe das große Zahnrad (46) angetrieben wird, wobei die beiden Endlagen mit dem Kontrollschalter des Unterteils (41) und mit dem Kontrollschalter der Heckklappe (42) signalisiert werden.

6. Schaltung der elektrischen Betätigung der zweigeteilten Heckklappe für Kraftfahrzeuge gemäß dem Anspruch 5, **dadurch gekennzeichnet, dass** das Getriebe aus Schneckenwelle (44), mit welcher der Rotor des Motors (43) versehen ist, und kleinem Zahnrad (45) besteht.

7. Schaltung der elektrischen Betätigung der zweigeteilten Heckklappe für Kraftfahrzeuge gemäß den Ansprüchen 5 und 6, **dadurch gekennzeichnet, dass** die Schalter (41) und (42) je nach Position des vom Motor (43) angetriebenen Zahnrades (46) schließen und öffnen, wobei der Motor in Abhängigkeit von Signalen vom Steuergerät gesteuert wird.

## Claims

1. Circuit for the electrical actuation of the two-part tailgate for motor vehicles (3), which tailgate comprises the upper part (1) and the lower part (2), **characterized in that** the lower part (2) is provided with an unlocking switch (32) for actuating the lower lock (19), with the lock ensuring the connection between the tailgate (3) and/or the lower part (2) and the vehicle body (21) or the disconnection of the said elements, and **in that** the switch (31) for the upper part is provided on the lower part (2), which switch serves to actuate the actuating elements (30, 30') which are mounted in the trunk space of the vehicle body (21).

2. Circuit for the electrical actuation of the two-part tailgate for motor vehicles according to Claim 1, **characterized in that** the actuating elements (30, 30') ensure the connection between the upper part (1) and the lower part (2) and/or between the upper part (1) and the vehicle body (21) or the disconnection of the said elements.

3. Circuit for the electrical actuation of the two-part tailgate for motor vehicles according to the above claims, **characterized in that** the electrical actuation of the two-part tailgate for motor vehicles is controlled by the controller of the tailgate (35), said controller receiving signals from the unlocking switch (32) and the switch (31) for the upper part and from the controller of the comfort and convenience electronics (36), and activating the actuating elements (30, 30') and, by means of the controller (36), the lower lock (19) as a function of the state of these signals.

4. Circuit for electrical actuation of the two-part tailgate for motor vehicles according to Claims 1 and 2, **characterized in that** the electrical actuation is controlled by the controller which receives signals from the unlocking switch (32) and the switch (31) for the upper part, and actuates the actuating elements (30, 30') and the lower lock (19) as a function of the state of these signals and the state of the central locking system.

5. Circuit for the electrical actuation of the two-part tailgate for motor vehicles according to the above claims, **characterized in that** the actuating elements (30, 30') comprise the motor (43) which is driven via the gear mechanism, the large gear wheel (46), with the two end positions being indicated by the control switch (41) for the lower part and by the control switch (42) for the tailgate.

6. Circuit for the electrical actuation of the two-part tailgate for motor vehicles according to Claim 5, **characterized in that** the gear mechanism comprises the worm shaft (44), with which the rotor of the motor (43) is provided, and a small gear wheel (45).

7. Circuit for the electrical actuation of the two-part tailgate for motor vehicles according to Claims 5 and 6, **characterized in that** the switches (41) and (42) close and open as a function of the position of the gear wheel (46) which is driven by the motor (43), with the motor being controlled as a function of signals from the controller.

## Revendications

1. Circuit d'actionnement électrique d'un hayon en deux parties pour véhicules automobiles (3), composé de la partie supérieure (1) et de la partie inférieure (2), **caractérisé en ce que** la partie inférieure (2) est pourvue d'un commutateur de déverrouillage (32) pour actionner la serrure inférieure (19), la serrure garantissant la jonction entre le hayon (3) et/ou la partie inférieure (2) et la carrosserie (21) et/ou leur séparation et **en ce que** le commutateur de la partie supérieure (31) se trouve au niveau de la partie inférieure (2), ledit commutateur servant à l'actionnement des éléments de réglage (30, 30') dans le coffre de la carrosserie (21).

2. Circuit d'actionnement électrique d'un hayon en deux parties pour véhicules automobiles selon la revendication 1, **caractérisé en ce que** les éléments de réglage (30, 30') garantissent la jonction entre la partie supérieure (1) et la partie inférieure (2) et/ou entre la partie supérieure (1) et la carrosserie (21) et/ou leur séparation.

3. Circuit d'actionnement électrique d'un hayon en deux parties pour véhicules automobiles selon les revendications précédentes, **caractérisé en ce que** l'actionnement électrique d'un hayon en deux parties pour véhicules automobiles est commandé par l'appareil de commande du hayon (35) qui reçoit les signaux provenant du commutateur de déverrouillage (32) et du commutateur de la partie supérieure (31) et de l'appareil de commande de l'électronique de confort (36) et commande respectivement, en fonction de l'état de ces signaux, les éléments de réglage (30, 30') ainsi que la serrure inférieure (19) à l'aide de l'appareil de commande (36).

4. Circuit d'actionnement électrique d'un hayon en deux parties pour véhicules automobiles selon les revendications 1 et 2, **caractérisé en ce que** l'actionnement électrique est commandé par l'appareil de commande qui reçoit les signaux du commutateur de déverrouillage (32) et du commutateur de la partie supérieure (31) et actionne respectivement, en fonction de l'état de ces signaux et de l'état de l'installation de fermeture centralisée, les éléments de réglage (30, 30') et la serrure inférieure (19).

5. Circuit d'actionnement électrique d'un hayon en deux parties pour véhicules automobiles selon les revendications précédentes, **caractérisé en ce que** les éléments de réglage (30, 30') se composent du moteur (43) qui est engrené via l'engrenage, la grande roue dentée (46), les deux positions d'extrémité étant signalées par le commutateur de contrôle de la partie inférieure (41) et par le commutateur de contrôle du hayon (42).

6. Circuit d'actionnement électrique d'un hayon en deux parties pour véhicules automobiles selon la revendication 5, **caractérisé en ce que** l'engrenage se compose d'un arbre hélicoïdal (44) dont est pourvu le rotor du moteur (43) et d'une petite roue dentée (45).

7. Circuit d'actionnement électrique d'un hayon en deux parties pour véhicules automobiles selon les revendications 5 et 6, **caractérisé en ce que** les commutateurs (41) et (42) se ferment et s'ouvrent respectivement en fonction de la position de la roue dentée (46) entraînée par le moteur (43), le moteur étant commandé en fonction des signaux envoyés par l'appareil de commande.
